(19) Europäisches Patentamt
European Patent Office
Office européen des brevets

(11) **EP 4 799 788 A1**

(12) **EUROPEAN PATENT APPLICATION**
published in accordance with Art. 153(4) EPC

(43) Date of publication:
**02.09.2026 Bulletin 2026/36**

(21) Application number: **23951049.8**

(22) Date of filing: **27.10.2023**

(51) International Patent Classification (IPC):
***B29C 45/14*** $^{(2006.01)}$ ***B29C 43/18*** $^{(2006.01)}$
***B29C 65/70*** $^{(2006.01)}$

(52) Cooperative Patent Classification (CPC):
**B29C 43/18; B29C 45/14; B29C 65/70;** Y02E 60/10

(86) International application number:
**PCT/JP2023/038928**

(87) International publication number:
**WO 2025/088799 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Teijin Limited**
**Osaka-shi, Osaka 530-0005 (JP)**

(72) Inventors:
- **KITAGAWA, Masahiro**
  **Osaka-shi, Osaka 530-0005 (JP)**
- **YOKOMIZO, Hodaka**
  **Osaka-shi, Osaka 530-0005 (JP)**
- **SHI, Jianwei**
  **Osaka-shi, Osaka 530-0005 (JP)**

(74) Representative: **Hoffmann Eitle**
**Patent- und Rechtsanwälte PartmbB**
**Arabellastraße 30**
**81925 München (DE)**

# (54) INSERT MOLDED BODY, BATTERY TRAY, PROTECTIVE COVER FOR BATTERY TRAY, INVERTER BOX, AND METHOD FOR PRODUCING INSERT MOLDED BODY

(57) An insert-molded body (1) includes a resin component (10) and a metal component (20), in which the resin component (10) has an uneven thickness portion (11) and a thin portion (12) thinner than the uneven thickness portion (11), the metal component (20) is at least partially disposed on an outer surface of the resin component (10) along the uneven thickness portion (11) or the thin portion (12), the metal component (20) has a diverting portion (23) in which a direction extending on the outer surface is changed, and the resin component (10) and the metal component (20) are fixed to each other in the diverting portion (23).

FIG.1

1
20
10
B
B
A
A
21
22
30
23



EP 4 799 788 A1

## Description

TECHNICAL FIELD

The present disclosure relates to an insert-molded body, a battery tray, a protective cover for a battery tray and an inverter box, and a method of manufacturing an insert-molded body.

BACKGROUND ART

An insert-molded body is a molded body manufactured by combining a resin material and a metal material and by placing an insert such as a metal component in a mold and molding same. Since components having a desired structure can be manufactured in simple steps, insert-molded bodies are used as various components such as automobile components. Patent Literature 1 discloses an insert molding method in which an insert component that is a metal conductor is set in a mold, and a thermoplastic resin is injected and integrally molded. Patent Literature 2 discloses a method of manufacturing a seat back frame for an automobile, the method including: shaping a fiber-reinforced composite material into a shape of a seat back frame body by cold press molding; and welding a metal plate to the seat back frame body by insert molding at the time of shaping.

CITATION LIST

PATENT LITERATURE

Patent Literature 1: WO2015/029482
Patent Literature 2: WO2013/021482

SUMMARY OF INVENTION

TECHNICAL PROBLEM

For example, an insert-molded body in which a metal component is disposed on a resin component can be used as an impact detection sensor. However, in such an insert-molded body in which a metal component is disposed on a resin component, the metal component may rise from the resin component during molding. When the metal component rises, the dimension of the molded body may deviate, and performance of the component may deteriorate.
The present disclosure relates to an insert-molded body in which rising of a metal component is suppressed and to a method of manufacturing an insert-molded body.

SOLUTION TO PROBLEM

An insert-molded body according to an embodiment of the present disclosure includes a resin component and a metal component, in which the resin component has an uneven thickness portion and a thin portion thinner than the uneven thickness portion, the metal component is at least partially disposed on an outer surface of the resin component along the uneven thickness portion or the thin portion, the metal component includes a diverting portion in which a direction extending on the outer surface is changed, and the resin component and the metal component are fixed to each other in the deflection portion.
A method of manufacturing an insert-molded body according to an embodiment of the present disclosure is a method of manufacturing an insert-molded body having a resin component and a metal component, in which the resin component has an uneven thickness portion and a thin portion thinner than the uneven thickness portion, the metal component is at least partially disposed on an outer surface of the resin component along the uneven thickness portion or the thin portion, the metal component has a diverting portion in which a direction extending on the outer surface is changed, and the method includes a step of fixing the resin component and the metal component to each other in the diverting portion.

ADVANTAGEOUS EFFECTS OF INVENTION

According to the insert-molded body and the method of manufacturing an insert-molded body of the present disclosure, an insert-molded body in which rising of a metal component is suppressed can be provided.

BRIEF EXPLANATION OF DRAWINGS

FIG. 1 is a plan view illustrating an insert-molded body according to a first embodiment of the present disclosure.
FIG. 2 is a cross-sectional view taken along A-A in FIG. 1 as viewed from a direction of arrows.
FIG. 3 is a cross-sectional view taken along B-B in FIG. 1 as viewed from a direction of arrows.
FIG. 4 is a cross-sectional view illustrating a part of a resin component that does not have a resin layer with different fiber volume fractions.
FIG. 5 is a cross-sectional view illustrating an insert-molded body having a resin layer with different fiber volume fractions.
FIG. 6 is a cross-sectional view of a mold for manufacturing an insert-molded body according to an embodiment of the present disclosure.
FIG. 7 is a plan view illustrating an insert-molded body according to a second embodiment of the present disclosure.
FIG. 8 is a plan view illustrating an insert-molded body according to a third embodiment of the present disclosure.
FIG. 9A is a cross-sectional view of a resin component for explaining flatness Fa.
FIG. 9B is a cross-sectional view of the resin component for explaining flatness Fa.
FIG. 10 is a cross-sectional view of a resin component for explaining a difference h between the thickness of an uneven thickness portion and the thicknesses of a thin portion.
FIG. 11 is a schematic diagram illustrating a protective cover of a battery tray mounted in a vehicle.
FIG. 12 is a cross-sectional view of an insert-molded body used in an inverter box.

DESCRIPTION OF EMBODIMENTS

First, embodiments of the present disclosure will be described. An insert-molded body according to an embodiment of the present disclosure includes (1) a resin component and a metal component, in which the resin component has an uneven thickness portion and a thin portion thinner than the uneven thickness portion, the metal component is at least partially disposed on an outer surface of the resin component along the uneven thickness portion or the thin portion, the metal component includes a diverting portion in which a direction extending on the outer surface is changed, and the resin component and the metal component are fixed to each other in the diverting portion.

In the case of manufacturing an insert-molded body in which a metal component is disposed on a resin component, the metal component may rise in a thickness direction (a direction perpendicular to an outer surface of the resin component). In addition, when the metal component is cooled, contraction force in a different vector is generated in the diverting portion, and therefore the diverting portion is particularly likely to rise. In the insert-molded body according to the present embodiment, since the diverting portion of the metal component is fixed to the resin component, rising of the metal component can be suppressed.

(2) In the above item (1), the metal component may be at least partially disposed along the thin portion.

In the insert-molded body according to the present embodiment, the metal component is disposed at the top of a convex portion provided in a mold for forming the thin portion when being molded. For example, when a resin material is stacked and press-molded from above after the metal component is disposed along the convex portion (top portion) of a lower mold at the time of insert molding, the metal component is disposed along the bottom of the thin portion (concave portion) when the insert-molded body is formed.

(3) In the above item (1), the metal component may be at least partially disposed along the uneven thickness portion.

In the insert-molded body according to the present embodiment, the metal component is disposed in a groove provided in a mold for forming the uneven thickness portion when being molded. Therefore, positioning of the metal component is facilitated, and molding is easy. For example, when the resin material is stacked from above and press-molded after the metal component is disposed along the concave portion (groove portion) of the lower mold at the time of insert molding, the metal component is disposed along the top of the uneven thickness portion (convex portion) when the insert-molded body is formed.

(4) In any one of the above items (1) to (3), the metal component may have a first portion extending in a first in-plane direction and a second portion extending in a second in-plane direction different from the first in-plane direction, and the diverting portion may connect the first portion and the second portion.

The diverting portion connecting the first portion and the second portion extending in different directions particularly easily rises. According to the insert-molded body of the present embodiment, since the diverting portion described above is fixed, rising can be effectively suppressed.

(5) In the above item (4), the first in-plane direction and the second in-plane direction may be perpendicular to each other.

The insert-molded body according to the present embodiment has a shape bent perpendicularly in the diverting portion, and the effect of suppressing rising provided by fixing the diverting portion is particularly enhanced. Further, the degree of freedom in arrangement of the metal components is high.

(6) In any of the above items (1) to (5), the resin component may be formed from a fiber-reinforced composite material, and a fiber volume fraction Vfa of the uneven thickness portion may be smaller than a fiber volume fraction Vfb of the thin portion.

For the insert-molded body according to the present embodiment, a flat plate-shaped resin can be used as a resin material before molding, and the insert-molded body according to the present embodiment can be manufactured by a simple method.

(7) In any of the above items (1) to (6), the resin component may be formed of a fiber-reinforced composite material, the resin component may include a first resin layer and a second resin layer disposed closer to the metal component side than the first resin layer, and a fiber volume fraction Vf1 of the first resin layer may be larger than a fiber volume fraction Vf2 of the second resin layer.

In the insert-molded body having the uneven thickness portion and the thin portion, warpage tends to occur during cooling in a molding step. On the other hand, in the case where the insert-molded body has a resin layer with different fiber volume fractions, since the contraction rate varies depending on the fiber volume fractions, warping force is generated during cooling due to the difference in contraction rates of respective resin layers. **In** the insert-molded body according to the present embodiment, by laminating the first resin layer and the second resin layer having different contraction rates in predetermined order, warpage caused by the difference in contraction rates of the resin layers and warpage caused by the shape cancel each other out, and warpage can be prevented as a whole.

(8) In any one of the above items (1) to (7), the resin component may be formed from a fiber-reinforced composite material, and the weight average fiber length of reinforcing fibers contained in the resin component may be 100 mm or less.

In the insert-molded body according to the present embodiment, the fiber length contained in the resin component is short, so that warpage of the resin component caused during cooling in a molding step can be suppressed.

(9) In the above item (2) or (3), when a direction perpendicular to the outer surface of the resin component is a thickness direction, a difference between the thickness of the uneven thickness portion and the thickness of the thin portion may be equal to or greater than the thickness of the metal component.

When the metal component is at least partially disposed along the thin portion, in the insert-molded body according to the present embodiment, when the difference between the thickness of the uneven thickness portion and the thickness of the thin portion is equal to or greater than the thickness of the metal component, the metal component disposed in a molded product is less likely to deviate.

In the case where the metal component is at least partially disposed along the uneven thickness portion, the metal component is easily positioned and easily molded in the insert-molded body according to the present embodiment because the depth of the groove provided in the mold for forming the uneven thickness portion is twice or more the thickness of the metal component. As described above, for example, when the metal component is disposed along the concave portion (groove portion) of the lower mold and the resin material is then stacked thereon, followed by press-molding from above at the time of insert molding, the metal component is disposed along the top of the uneven thickness portion (convex portion) in the insert-molded body formed. At this time, when the difference between the thickness of the uneven thickness portion and the thickness of the thin portion is designed to be equal to or greater than the thickness of the metal component, the metal component is less likely to deviate from the concave portion (groove portion) of the lower mold during molding.

(10) In any of the above items (1) to (9), the uneven thickness portion and the thin portion may be alternately positioned in a cross-sectional view perpendicular to the outer surface of the resin component.

According to the insert-molded body of the present embodiment, the metal component can be arranged on the resin component without bias.

(11) In the above item (10), the metal component may be at least partially disposed along the uneven thickness portion or the thin portion, and a relationship between the flatness Fa of the resin component and the difference h between the thickness of the uneven thickness portion and the thickness of the thin portion may satisfy $0 < Fa/h < 1.3$.

According to the insert-molded body of the present embodiment, rising of the metal component from the resin component can be further suppressed, and it is easy to combine same with other components.

(12) A battery tray or a protective cover of a battery tray according to an embodiment of the present disclosure includes the insert-molded body according to any one of items (1) to (11), in which the metal component is an electric circuit for impact detection.

According to the battery tray or the protective cover of a battery tray according to the present embodiment, ignition of a battery or the like can be prevented by detecting impact.

(13) An inverter box according to an embodiment of the present disclosure includes the insert-molded body according to any one of items (1) to (11), in which the metal component is an electric circuit.

In the inverter box according to the present embodiment, the electric circuit and the resin component are fixed,

and rising of the electric circuit is suppressed.

A method of manufacturing an insert-molded body according to an embodiment of the present disclosure is (14) a method of manufacturing an insert-molded body having a resin component and a metal component, in which the resin component has an uneven thickness portion and a thin portion thinner than the uneven thickness portion, the metal component is at least partially disposed on an outer surface of the resin component along the uneven thickness portion or the thin portion, the metal component has a diverting portion in which a direction extending on the outer surface is changed, and the method includes a step of fixing the resin component and the metal component to each other in the diverting portion.

According to the method of manufacturing an insert-molded body according to the present embodiment, it is possible to provide an insert-molded body in which rising of the metal component is suppressed by fixing the diverting portion of the metal component.

(15) In the above item (14), the insert-molded body may further have a sealing layer for sealing the metal component, and the method may include a step of molding the sealing layer together with the resin component and the metal component.

According to the method of manufacturing an insert-molded body according to the present embodiment, it is possible to protect the insert-molded body and impart an insulating property to the insert-molded body without requiring a separate step.

Hereinafter, an insert-molded body and a method of manufacturing an insert-molded body according to an embodiment of the present disclosure will be described with reference to drawings. However, the present invention is not limited to these examples. Dimensions, positions, and the like of the components in the drawings are schematic, and the dimensions, positions, and the like of the components in an actual product are not intended to be limited.

[Insert-Molded Body]

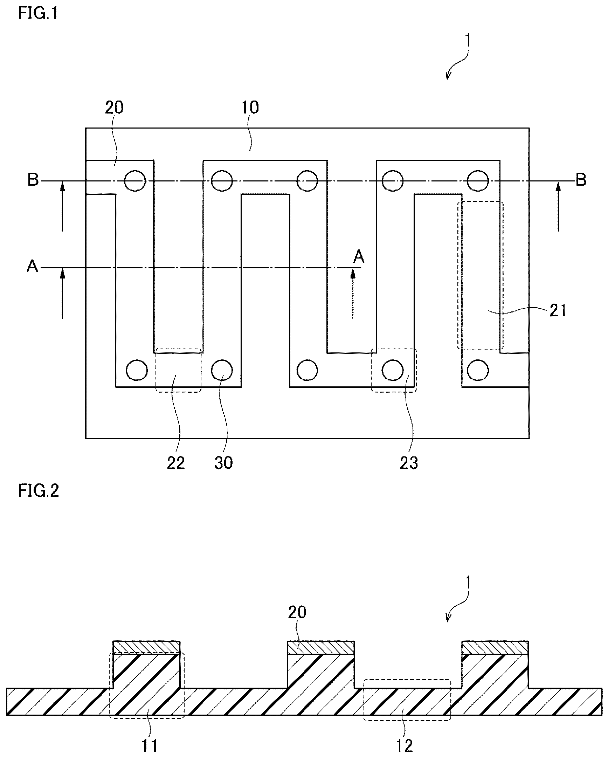

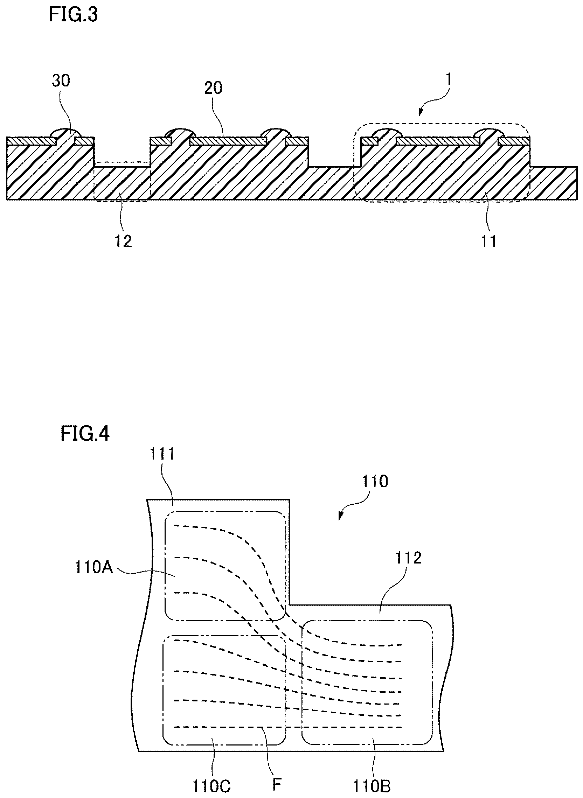

FIG. 1 is a plan view illustrating an insert-molded body 1 according to a first embodiment of the present disclosure. The insert-molded body 1 according to the present embodiment can be used, for example, as an impact detection sensor disposed at a bottom portion of a vehicle. As illustrated in FIG. 1, the insert-molded body 1 includes a resin component 10 and a metal component 20, and the metal component 20 is disposed on an outer surface of the resin component 10. FIG. 2 is a cross-sectional view taken along a line A-A in FIG. 1 as viewed from a direction of arrows. FIG. 3 is a cross-sectional view taken along a line B-B in FIG. 1 as viewed from a direction of arrows.

(Resin Component)

The resin component 10 has a substantially flat plate shape. As shown in FIG. 2, the resin component 10 has an uneven thickness portion 11 and a thin portion 12 that is thinner than the uneven thickness portion 11. A convex portion corresponding to the uneven thickness portion 11 is provided on one main surface (upper surface in FIG. 2) of the resin component 10, and the other main surface (lower surface in FIG. 2) is flat. In the present disclosure, the uneven thickness portion 11 refers to a portion with uneven thickness with respect to the entire resin component 10, and the uneven thickness portion 11 itself may be uniform in thickness. When the metal component 20 is disposed along the uneven thickness portion 11, it is preferable that an outer surface of the uneven thickness portion 11 in which the metal component 20 is disposed is flat.

A resin material for forming the resin component 10 is not particularly limited, and various raw materials can be appropriately selected according to the use of the insert-molded body 1. For example, in the case where the insert-molded body 1 is a vehicle component, the resin component 10 may be formed from a fiber-reinforced composite material from the viewpoints of improving strength and weight reduction. The reinforcing fibers may be either carbon fibers or glass fibers, or both of them may be used in combination. The resin may be either a thermosetting resin or a thermoplastic resin, and a thermoplastic resin is preferably used.

Examples of the thermoplastic resin include a vinyl chloride-based resin, a vinylidene chloride-based resin, a vinyl acetate-based resin, a polyvinyl alcohol-based resin, a polystyrenebased resin, an acrylonitrile-styrene-based resin (AS resin), an acrylonitrile-butadiene-styrene-based resin (ABS resin), an acrylic resin, a methacrylic resin, a polyethylene-based resin, a polypropylene-based resin, various thermoplastic polyamide-based resins, a polyacetal-based resin, a polycarbonate-based resin, a polyethylene terephthalate-based resin, a polyethylene naphthalate-based resin, a polybutylene naphthalate-based resin, a polybutylene terephthalate-based resin, a polyarylate-based resin, a polyphenylene ether-based resin, a polyphenylene sulfide-based resin, a polysulfone-based resin, a polyether sulfone-based resin, a polyether ether ketone-based resin, and a polylactic acid-based resin.

The thermoplastic resin may be a crystalline resin or an amorphous resin. In the case of the crystalline resin, specific preferable examples of the crystalline resin include a polyamide-based resin such as nylon 6, a polyethylene terephthalate-based resin, a polybutylene terephthalate-based resin, a polyethylene-based resin, a polypropylene-based

resin, a polyacetal-based resin, and a polyphenylene sulfide-based resin. Among these, a polyamide resin, a polybutylene terephthalate resin, and a polyphenylene sulfide resin are preferably used because of excellent heat resistance and mechanical strength.

A thickness of the resin component 10 is not particularly limited, but is, for example, 0.5 mm to 10.0 mm, and preferably 1.0 mm to 8.0 mm. The thickness of the resin component 10 here is the thickness of the thickest portion, and more specifically, the maximum thickness of the uneven thickness portion 11.

(Metal Component)

The metal component 20 is a metal plate disposed on an outer surface of the resin component 10. As shown in FIG. 1, the metal component 20 is disposed on a main surface of the resin component 10 in a bellows shape, and is configured to widely cover the main surface of the resin component 10. The metal component 20 is at least partially disposed on the outer surface of the resin component 10 along the uneven thickness portion 11 or the thin portion 12. In the insert-molded body 1 of FIG. 1, the metal component 20 is disposed along the uneven thickness portion 11 of the resin component 10, more specifically, on the uneven thickness portion 11.

As shown in FIG. 1, the metal component 20 has a diverting portion 23 in which a direction extending on the outer surface is changed. More specifically, the metal component 20 has a first portion 21 extending in a vertical direction (hereinafter, referred to as a first in-plane direction) on the paper surface, and a second portion 22 extending in a left-right direction (hereinafter, referred to as a second in-plane direction) on the paper surface, and the first portion 21 and the second portion 22 are connected in the diverting portion 23. In the present embodiment, the range of the rectangle in which a portion extended from the first portion 21 and a portion extended from the second portion 22 overlap can be regarded as the diverting portion 23.

A metal material forming the metal component 20 is not particularly limited, and various metals or alloys can be used depending on required properties. Examples of the metal material include copper, aluminum, iron, chromium, nickel, manganese, or an alloy thereof.

A shape of the metal component 20 is not limited to a plate shape, and can be appropriately changed according to application or a configuration. Specifically, the metal component 20 may be a metal wire having a substantially circular cross section, or may be a bundle of laminated or integrated metal wires.

A thickness of the metal component 20 is not particularly limited, and can be appropriately changed according to application or a configuration. The thickness of the metal component 20 may be, for example, 0.01 mm to 10 mm, may be 0.05 mm to 1.0 mm, or may be 0.10 mm to 0.50 mm. When the metal component 20 is a metal wire, the maximum diameter along the thickness direction in a cross section of the metal wire is regarded as the thickness.

(Fixing of Resin Component and Metal Component)

The resin component 10 and the metal component 20 are fixed to each other in the diverting portion 23 of the metal component 20. Specifically, the insert-molded body 1 has a caulking portion 30 that fixes the resin component 10 and the metal component 20 in the diverting portion 23 of the metal component 20. FIG. 3 is a cross-sectional view taken along a line B-B in FIG. 1 as viewed from a direction of arrows, and shows a state in which the resin component 10 and the metal component 20 are fixed by the caulking portion 30. A hole is provided in the metal component 20 at a position corresponding to the caulking portion 30. The caulking portion 30 is formed by a resin material extruded from the hole provided in the metal component 20 during compression-molding. Therefore, the caulking portion 30 is formed from the same resin material as that for the resin component 10.

Since the insert-molded body 1 is manufactured through heating during molding and subsequent cooling to room temperature, each component constituting the insert-molded body 1 contracts at the time of cooling. In the case of the insert-molded body 1 having the resin component 10 and the metal component 20, since the thermal expansion coefficient of the metal component 20 is generally larger than that of the resin component 10, the metal component 20 contracts greater than the resin component 10. In particular, in the diverting portion 23 in which the extending direction of the metal component 20 is changed, contraction force in a different vector is generated during contraction. As a result, the diverting portion 23 of the metal component 20 is particularly easily rises from the resin component 10.

In the insert-molded body 1 according to the present embodiment, the resin component 10 and the metal component 20 are fixed to each other by the caulking portion 30 in the diverting portion 23 which easily rises. Rising of the metal component 20 can be suppressed thereby.

(Suppression of Rising due to Warpage of Resin Component)

When the metal component 20 is at least partially disposed along the uneven thickness portion 11 or the thin portion 12, and the uneven thickness portion 11 and the thin portion 12 are alternately positioned in a cross-sectional view

perpendicular to the outer surface of the resin component 10, it is preferable that the relationship between the flatness Fa of the resin component 10 and the difference h between a thickness of the uneven thickness portion 11 and the thickness of the thin portion 12 satisfy $0 < Fa/h < 1.3$. The flatness Fa is defined by the following procedures 1 to 5. (Procedure 1) The resin component 10 is left to stand such that a surface (hereinafter, simply referred to as "installation surface") among the outer surfaces of the uneven thickness portion 11 on which the metal component 20 is disposed is on a lower side. (Procedure 2) A cross section of the resin component 10 is observed in a cross-sectional view in which the uneven thickness portion 11 and the thin portion 12 are alternately positioned. An observation range of the resin component 10 is cut out such that a length Ly along a direction in which the uneven thickness portion 11 and the thin portion 12 are alternately located is 40 cm. (Procedure 3) Pay attention to the installation surface of the uneven thickness portion 11 or the thin portion 12 on which the metal component 20 is disposed. (Procedure 4) Two parallel ideal straight lines are drawn with a minimum vertical width so as to include the entire installation surface. (Procedure 5) A distance between the two ideal straight lines drawn in procedure 4 is defined as the flatness Fa.

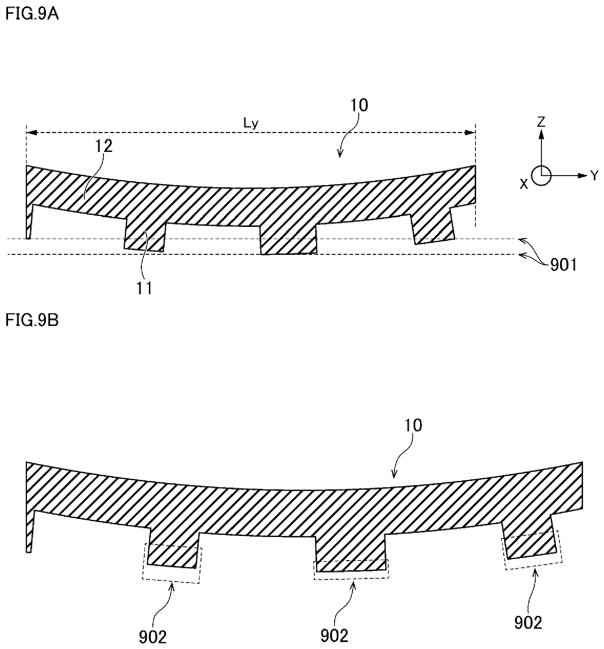

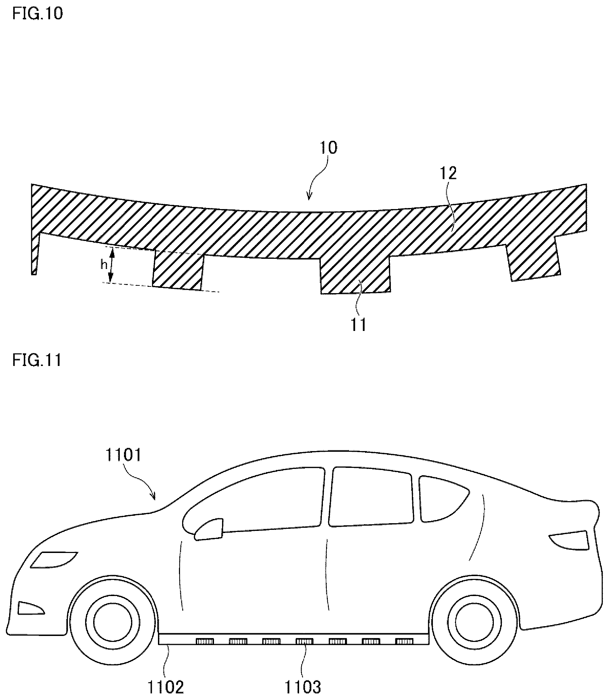

Procedures 1 to 5 will be described with reference to FIGS. 9A and 9B. Drawings in FIGS. 9A, 9B, and 10 are drawn, assuming that the metal component 20 is disposed on the uneven thickness portion 11.

FIG. 9A illustrates the resin component 10 left to stand such that the installation surface of the uneven thickness portion 11 is on the lower side. The uneven thickness portion 11 and the thin portion 12 are alternately positioned along the Y-axis direction in FIG. 9A. The Z-axis direction is the thickness direction of the resin component 10. FIG. 9A is a view in which the observation range of the resin component 10 is cut out such that the length Ly along the Y-axis direction is 40 cm, and the cross section along the Y-Z plane is observed (procedure 2). The installation surface of the uneven thickness portion 11 on which the metal component 20 is disposed is a region indicated by 902 in FIG. 9B (procedure 3). The two parallel ideal straight lines are shown by 901 in FIG. 9A. The two parallel ideal straight lines 901 are drawn such that the distance therebetween is minimized, that is, two parallel ideal straight lines 901 are drawn with a minimum vertical width.

A method of reversing the top and bottom of the molded body in FIG. 9A and performing observation and measurement in a state in which the surface of the thin portion 12 is in contact with a desk is not employed in the present disclosure.

In the case where the flatness Fa varies depending on the observation range, if there is a portion satisfying $0 < Fa/h < 1.3$ even at one point, it is considered that $0 < Fa/h < 1.3$ is satisfied in the installation surface of the uneven thickness portion 11.

As illustrated in FIG. 10, the difference h between the thickness of the uneven thickness portion 11 and the thickness of the thin portion 12 refers to the depth of the groove when a cross section in which the uneven thickness portion 11 and the thin portion 12 are alternately positioned is observed. When the height h of the resin component 10 varies depending on the measurement position, if h at least one measurement position satisfies $0 < Fa/h < 1.3$, it is considered that $0 < Fa/h < 1.3$ is satisfied in the installation surface of the uneven thickness portion 11.

When $Fa/h = 0$ is satisfied, the installation surface of the uneven thickness portion 11 on which the metal component 20 is disposed is a completely flat plane, that is, an ideal plane. The installation surface of the uneven thickness portion 11 satisfying $0 < Fa/h$ indicates that the resin component 10 is warped so as to have a convex shape toward the metal component 20. When $0 < Fa/h$ is satisfied, the metal component 20 can be pulled in the surface direction (the Y direction in FIG. 9A) of the resin component 10, and rising of the metal component 20 from the resin component 10 can be further suppressed.

When $Fa/h < 1.3$ is satisfied, it is easy to combine same with other components, and assembly of an automobile is easy, for example. The relationship to be satisfied is more preferably $0 < Fa/h \leq 1.0$, still more preferably $0 < Fa/h \leq 0.7$, further preferably $0 < Fa/h \leq 0.4$, and most preferably $0 < Fa/h \leq 0.1$.

The value of Fa is preferably 0 mm or more and less than 30 mm, more preferably more than 0 mm and less than 20 mm, still more preferably more than 0 mm and less than 15 mm, further preferably more than 0 mm and less than 10 mm, and most preferably more than 0 mm and less than 5 mm.

The value of h is preferably more than 0 mm and less than 30 mm, more preferably more than 0 mm and less than 20 mm, still more preferably more than 0 mm and less than 15 mm, further preferably more than 0 mm and less than 10 mm, and most preferably more than 0 mm and less than 5 mm.

In the insert-molded body 1 according to the present embodiment, the metal component 20 is disposed along the uneven thickness portion 11. The insert-molded body 1 having such a configuration can be manufactured by placing the metal component 20 in a groove provided in a mold 40 and molding same. Since the metal component 20 is disposed in the groove of the mold 40, the metal component 20 is easily positioned and easily molded. It is not necessary that the entire metal component 20 is disposed along the uneven thickness portion 11, and positioning is facilitated if the metal component 20 is at least partially disposed along the uneven thickness portion 11.

In the insert-molded body 1 according to the present embodiment, the first in-plane direction and the second in-plane direction of the metal component 20 are perpendicular to each other. When the first in-plane direction and the second in-plane direction of the metal component 20 are perpendicular to each other, the diverting portion 23 connected to the first portion 21 and the second portion 22 particularly easily rises. Therefore, by fixing the resin component 10 and the metal

component 20 in the diverting portion 23, rising of the metal component 20 can be effectively suppressed. In addition, when it is desired to widely cover the outer surface of the resin component 10 with the metal component 20, the degree of freedom in arrangement of the metal component 20 can be increased because the first in-plane direction and the second in-plane direction are perpendicular to each other.

When the resin component 10 is formed from the fiber-reinforced composite material, it is preferable that the fiber volume fraction Vfa of the uneven thickness portion 11 be smaller than the fiber volume fraction Vfb of the thin portion 12. In this case, a resin material (a so-called plate-shaped resin material) in which both main surfaces are flat can be used as the resin material to be placed on the mold 40, allowing manufacturing with a simple method. Specific description is as follows. When the resin material to be placed on the mold 40 is a resin material (a so-called plate-shaped resin material) in which both main surfaces are flat, the thin portion 12 is compressed by the mold 40 at the time of molding. At this time, the resin component in the thin portion 12 flows toward the uneven thickness portion 11, and the fibers contained in the resin material remain in the thin portion 12. As a result, the fiber volume fraction Vfa of the uneven thickness portion 11 is smaller than the fiber volume fraction Vfb of the thin portion 12.

The fiber volume fraction Vfa of the uneven thickness portion 11 is, for example, 25% to 45% and preferably 30% to 40%. The fiber volume fraction Vfb of the thin portion 12 is, for example, 30% to 50% and preferably 35% to 45%. A difference (Vfb-Vfa) between the fiber volume fraction Vfa of the uneven thickness portion 11 and the fiber volume fraction Vfb of the thin portion 12 is, for example, 1% to 15% and preferably 3% to 12%.

When the resin component is formed from the fiber-reinforced composite material, it is preferable that the resin component 10 have a first resin layer 13 and a second resin layer 14 disposed closer to the metal component 20 than the first resin layer 13, and the fiber volume fraction Vf1 of the first resin layer 13 be larger than the fiber volume fraction Vf2 of the second resin layer 14. Since the resin component 10 has the first resin layer 13 and the second resin layer 14 that satisfy the above-described relationship between the fiber volume fractions, warpage of the resin component 10 can be prevented. The reason for this will be described below.

FIG. 4 is an enlarged cross-sectional view of a part of the resin component 110 that does not have a resin layer (that is, resin layers corresponding to the first resin layer 13 and the second resin layer 14) with different fiber volume fractions. The resin component 110 is a component molded by compressing a plate-shaped resin material with a mold so as to provide the uneven thickness portion 111 and the thin portion 112. As illustrated in FIG. 4, the resin component 110 has a region 110A (region A), a region 110B (region B), and a region 110C (region C), with the fiber orientations and the fiber volume fractions thereof being different from one another. The region A is a region in an upper portion of the uneven thickness portion 111 and is a portion protruding upward in a cross-sectional view. The region B is a region corresponding to the thin portion 112. The region C is a region in a lower portion of the uneven thickness portion 111 and is a portion located below the region A. The differences among the fiber orientations and fiber volume fractions of the respective regions are generated because the manner of flow of fibers during compression-molding varies from region to region due to the concave-convex shape of the resin component 110. The plurality of dashed lines F in FIG. 4 are lines schematically showing the orientation and density of fibers in each region. The broken lines F are drawn for convenience of explanation, and do not indicate an exact position, orientation, density, or the like of the fibers contained in the resin component 110. As shown in FIG. 4, since the fiber orientation in the region A along the thickness direction is relatively strong, the region A hardly contracts even when cooled. Since the region B has a high fiber volume fraction and a small linear expansion coefficient, the amount of contraction during cooling is small. Since the region C has a low fiber volume fraction and a large linear expansion coefficient, the region C is most likely to contract during cooling. Since there is a difference in contraction rate during cooling depending on the regions A to C as described above, warpage is likely to occur in the insert-molded body 1 cooling in a molding step in the case of not having a resin layer with different fiber volume fractions, the resin layer having a concave-convex shape such as the uneven thickness portion 11 and the thin portion 12.

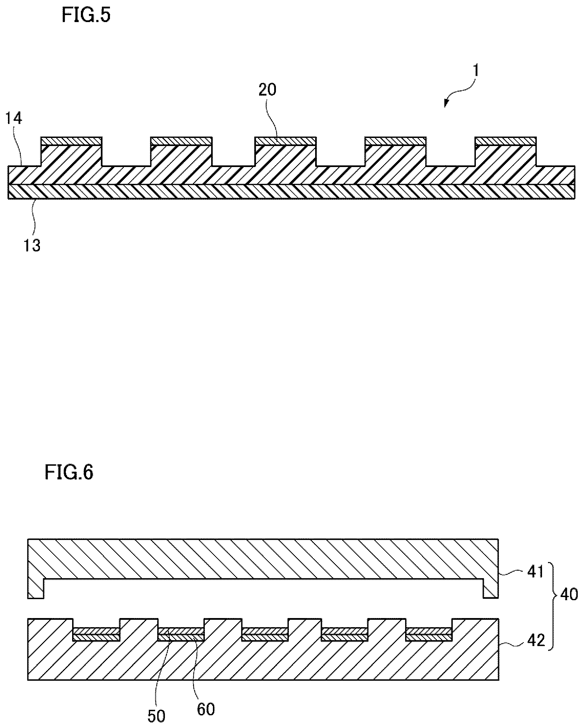

FIG. 5 is a cross-sectional view for explaining the first resin layer 13 and the second resin layer 14. When the insert-molded body 1 has a resin layer with different fiber volume fractions, warping force is generated during cooling due to the difference in contraction rates of respective resin layers. When the first resin layer 13 and the second resin layer 14 are laminated as illustrated in FIG. 5 and the fiber volume fraction Vf1 of the first resin layer 13 is larger than the fiber volume fraction Vf2 of the second resin layer 14, warpage caused by the difference in fiber orientation among the regions A to C in FIG. 4 and warpage caused by the difference in the contraction rates of the resin layers can cancel each other out. Accordingly, warpage can be suppressed as a whole.

The fiber volume fraction Vf1 of the first resin layer 13 is, for example, 25% to 45% and preferably 30% to 40%. The fiber volume fraction Vf2 of the second resin layer 14 is, for example, 15% to 35% and preferably 20% to 30%. The difference (Vf1 - Vf2) between the fiber volume fraction Vf1 of the first resin layer 13 and the fiber volume fraction Vf2 of the second resin layer 14 is, for example, 3% to 20% and preferably 5% to 15%.

The fiber volume fraction of the resin component 10 can be obtained by, for example, the following method.

A 100 mm × 100 mm sample is cut out from the resin component 10, and (i) the weight of the resin component is measured. (ii) The mixture is heated in an electric furnace (FP410 manufactured by Yamato Scientific Co., Ltd.) heated to 550°C in a nitrogen atmosphere for 4 hours to burn off organic substances such as matrix resin, and the organic

substances are weighed. The weights of the resin and the reinforcing fiber are calculated by weighing the weights of (i) to (ii). Next, the volume fraction of the reinforcing fibers is calculated from the following equation (1) using the specific gravity of each component.

Volume fraction = 100 x reinforcing fiber volume / (reinforcing fiber volume + resin volume) (1) (1)

When the resin component 10 is formed from a fiber-reinforced composite material, the weight average fiber length of the reinforcing fibers contained in the resin component 10 is preferably 100 mm or less. When the weight average fiber length is 100 mm or less, warpage of the insert-molded body 1 having the uneven thickness portion 11 and the thin portion 12 can be suppressed. The weight average fiber length of the reinforcing fibers contained in the resin component 10 is preferably 50 mm or less, more preferably 30 mm or less, and still more preferably 20 mm or less. The lower limit of the weight average fiber length is not particularly limited, but is, for example, 1 mm or more.

The weight average fiber length of the reinforcing fibers contained in the resin component 10 is obtained by, for example, the following method. Fiber lengths of 100 fibers randomly extracted from the resin component 10 are measured using a vernier caliper or the like to the millimeter. The weight average fiber length (Lw) is obtained by the following formula (a), where Li is the fiber length of each reinforcing fiber and j is the number of measured fibers.

[Mathematical formula 1]

$$\mathrm{Lw} = (\textstyle\sum_{i=1}^{j} L_i^{\,2})/(\sum_{i=1}^{j} L_i) \qquad \text{(a)}$$

In the insert-molded body 1 according to the present disclosure, when a direction perpendicular to the outer surface of the resin component 10 is taken as the thickness direction, the difference between the thickness of the uneven thickness portion 11 and the thickness of the thin portion 12 is preferably equal to or greater than the thickness of the metal component 20. When the difference between the thickness of the uneven thickness portion 11 and the thickness of the thin portion 12 is equal to or greater than the thickness of the metal component 20, the depth of the groove provided in the mold 40 for forming the uneven thickness portion 11 is twice or more the thickness of the metal component 20, so that the metal component 20 is easily positioned and easily molded. When metal components 20 are laminated or integrated, the above effect is obtained if the difference between the thickness of the uneven thickness portion 11 and the thickness of the thin portion 12 is equal to or greater than the thickness of the individual metal components 20, but is more preferably equal to or greater than the total thickness of the laminated or integrated metal components 20.

In the insert-molded body 1 according to the present disclosure, it is preferable that the uneven thickness portions 11 and the thin portions 12 be alternately positioned in a cross-sectional view perpendicular to the outer surface of the resin component 10. In the insert-molded body 1 according to the present embodiment, as shown in FIG. 2, the uneven thickness portion 11 and the thin portion 12 are alternately positioned in a cross-sectional view perpendicular to the outer surface of the resin component 10. Since the metal component 20 is disposed along the uneven thickness portion 11 or the thin portion 12, by having such a configuration, the metal component 20 can be disposed on the resin component 10 without unevenness. Note that "a cross section perpendicular to the outer surface of the resin component 10" is not uniquely determined, but a case in which the uneven thickness portion 11 and the thin portion 12 are alternately positioned in any cross-sectional view perpendicular to the outer surface of the resin component 10 is considered as the state where "the uneven thickness portion 11 and the thin portion 12 are alternately positioned in a cross-sectional view perpendicular to the outer surface of the resin component 10." It is more preferable that the uneven thickness portions 11 and the thin portions 12 are alternately positioned in all cross-sectional views perpendicular to the outer surface passing through the center of gravity of the resin component 10.

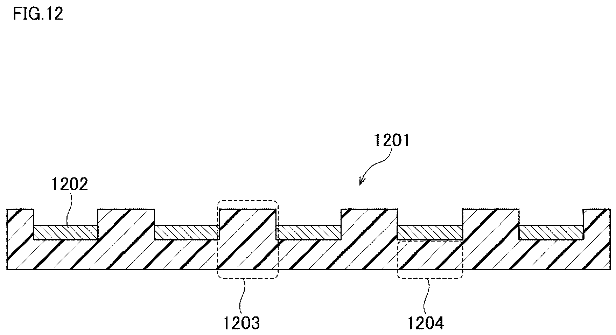

In addition, in the insert-molded body of the present disclosure, the metal component may be disposed along the thin portion rather than the uneven thickness portion, and the aspect shown in FIG. 12 to be described later can be referred to for such a configuration. An insert-molded body having such a configuration can be manufactured by, for example, placing a metal material in a convex portion instead of a concave portion in the mold 40 shown in FIG. 6 and molding the metal material. It is not necessary that the entire metal component is disposed along the thin portion, and if the metal component is at least partially disposed along the thin portion, the position of the metal component in a molded product is less likely to be displaced.

(Impact Detection Sensor)

A battery tray or a protective cover of a battery tray in the present disclosure includes the insert-molded body of the present disclosure. In the battery tray or the protective cover of a battery tray including the insert-molded body of the present disclosure, the metal component is, for example, an electric circuit for impact detection. FIG. 11 illustrates an

example of a protective cover 1102 of a battery tray mounted on a vehicle 1101. The protective cover 1102 of the battery tray includes an electric circuit 1103 for impact detection.

A battery mounted in an electric vehicle is heavy and is disposed below a vehicle floor protected by an automobile structure in order to lower the center of gravity. During highspeed driving, the battery mounted on the vehicle may be damaged by a flying stone or the like, and at a low speed, the battery may come into contact with the ground during a parking operation and cause damage. Therefore, the battery tray of the electric automobile may be rugged, or a battery tray protective cover may be attached below the battery tray to protect the battery box from below. In this case, it has been conventionally a responsibility of a driver to determine whether the automobile needs to be inspected at a repair shop when receiving an impact. However, it has been difficult to estimate an accurate degree of impact because the underneath of the automobile is difficult to see and an expert's eye is required to accurately assess the damage.

Therefore, by using the metal component in the present disclosure as an electric circuit for impact detection, impact can be detected, a degree of the impact can be classified, and a driver can be warned when completely destroyed. Accordingly, a hole can be prevented beforehand from being formed in the battery tray or the protective cover of a battery tray, causing ignition of the battery. Furthermore, a damaged area can be more specifically identified by the electric circuit, and a cell in the damaged area can be emptied by battery management to prevent a fire risk beforehand.

(Inverter Box)

An inverter box in the present disclosure includes the insert-molded body of the present disclosure. In the inverter box including the insert-molded body of the present disclosure, the metal component is, for example, an electric circuit. An inverter is a device for converting direct current (DC) supplied from a battery into alternating current (AC), and an inverter box is a box for storing an inverter. In the inverter box of the present disclosure, it is preferable that a current circuit is insert-molded in the thin portion (concave portion), and the metal component is disposed therein and is fixed to the resin component. A cross-sectional view of an insert-molded body 1201 used in the inverter box is illustrated in FIG. 12. The insert-molded body 1201 has an uneven thickness portion 1203 and a thin portion 1204 formed from resin, and an electric circuit 1202 is embedded in the thin portion 1204 (concave portion).

[Method of Manufacturing Insert-Molded Body]

Next, a method of manufacturing the insert-molded body 1 according to an embodiment of the present disclosure will be described. FIG. 6 is a diagram illustrating the mold 40 for manufacturing the insert-molded body 1. The mold 40 is composed of an upper mold 41 and a lower mold 42.

In FIG. 6, an example of a mold for manufacturing the insert-molded body 1 in which the metal component is at least partially disposed along the uneven thickness portion is illustrated. As shown in FIG. 6, a groove is provided in the lower mold 42, and a metal material 50 is placed so as to be fitted in the groove of the lower mold 42. The metal material 50 typically has the same shape as the metal component 20 after molding. That is, the metal material 50 has the diverting portion 23, and a hole for forming the caulking portion 30 is provided in the deflection portion 23. Thereafter, a thermoplastic resin material (not shown) having a flat plate shape is placed between the upper mold 41 and the lower mold 42, and then the mold 40 is heated to 150° C, and the mold 40 is closed to perform compression-molding. In this compression-molding step, the resin material flows in the groove of the lower mold 42 to form the uneven thickness portion 11. Further, the resin material is pushed out from the hole provided in the diverting portion 23 of the metal material 50 to form the caulked portion 30. After that, by cooling the mold 40 to room temperature, the insert-molded body 1 in which the metal component 20 and the resin component 10 are integrated is obtained. At this time, the metal component 20 and the resin component 10 are fixed to each other by the formed caulking portion 30.

The insert-molded body 1 thus molded has the resin component 10 and the metal component 20, the resin component 10 has the uneven thickness portion 11 and the thin portion 12 thinner than the uneven thickness portion 11, the metal component 20 is at least partially disposed on the outer surface of the resin component 10 along the uneven thickness portion 11 or the thin portion 12, and the metal component 20 has the diverting portion 23 in which the direction extending on the outer surface is changed. Although the resin component 10 is positioned on the upper side of the metal component 20, the configuration thereof coincides with that of the insert-molded body 1 illustrated in FIG. 2 when the obtained molded body is turned upside down. The above description is referred to for the detailed configuration of the insert-molded body 1, and redundant contents is omitted.

The method of manufacturing the insert-molded body 1 of the present disclosure includes a step of fixing the resin component 10 and the metal component 20 to each other in the diverting portion 23. A specific embodiment of the fixing step is not particularly limited, and it is sufficient that rising of the metal component 20 from the resin component 10 in the diverting portion 23 can be suppressed. As in the above embodiment, it is preferable to fix the resin component 10 and the metal component 20 in the diverting portion 23 at the same time as the molding of the insert-molded body 1.

In the method of manufacturing the insert-molded body 1, it is preferable that the insert-molded body 1 further

include a sealing layer for sealing the metal component 20, and the above manufacturing method include a step of molding the sealing layer together with the resin component 10 and the metal component 20. For example, as illustrated in FIG. 6, by placing a sealing material 60, which is a material of the sealing layer, together with the metal material 50 and performing molding, the sealing layer can be molded together with the resin component 10 and the metal component 20. Consequently, the insert-molded body 1 can be protected by the sealing layer and an insulating property can be imparted without undergoing a separate step. The sealing layer may serve as a sealant for the metal material, and may be, for example, a layer provided for the purpose of electric insulation, prevention of corrosion due to contact with water or gas, and prevention of destruction due to vibration. A material of the sealing layer is not particularly limited, and various materials such as a metal such as iron, a metal oxide, an inorganic material such as silica, inorganic mineral particles, and a resin composition can be used depending on the purpose. Further, an epoxy resin, a silicone resin, or a thermoplastic resin may be used as a matrix resin, and may optionally include various stabilizers, an organic substance to be an absorber and the like, a non-conductive metal body such as iron oxide, and the like.

Although FIG. 6 illustrates an embodiment in which the sealing material 60 is placed on the lower mold 42 together with the metal material 50, the method of manufacturing the insert-molded body 1 having the sealing layer is not limited to this embodiment. A method of molding the sealing layer may be injection molding or compression-molding, and may be appropriately selected depending on manufacturing facilities, a shape of the sealing layer, a material, and the like. Although FIG. 6 illustrates an example of the method of manufacturing the insert-molded body having the sealing layer, the method of manufacturing the insert-molded body of the present disclosure is also applicable to an insert-molded body having no sealing layer. That is, the sealing material 60 is not essential.

When the sealing layer is molded by injection molding, a supply path for supplying an injection material is provided in the lower mold 42, for example. By injecting the injection material into the inside of the mold at the time of insert molding, the insert-molded body 1 having the sealing layer can be obtained.

When the insert-molded body 1 is molded by compression-molding, a charge ratio of the resin material is preferably 90% or more, preferably 95% or more, and more preferably 99% or more. An upper limit of the charge ratio is not particularly limited, and may be more than 100%, but is preferably 100% or less in order to reduce the amount of material discarded. The charge ratio of the resin material at the time of compression-molding is a ratio (A2/A1) of the area A2 of the resin material placed in the mold 40 before molding to the area A1 of the insert-molded body 1 in a plan view. When the charge ratio is high, the flow of the matrix resin in the in-plane direction is prevented, and unevenness in fiber ratio of the resin component 10 after molding can thus be reduced. Accordingly, workability of the insert-molded body 1 is improved.

The present disclosure has been described above along with specific embodiments, but the present disclosure is not limited to these contents.

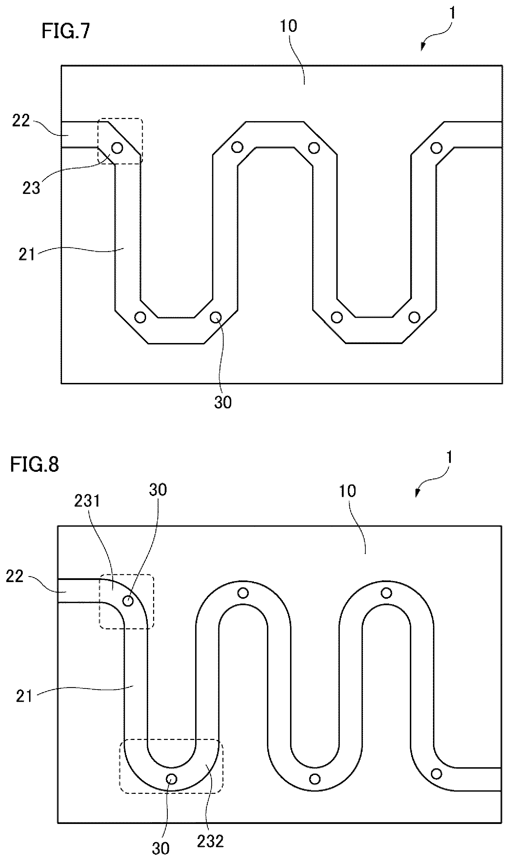

Other embodiments of the diverting portion 23 of the metal component 20 will be described with reference to drawings. FIG. 7 is a diagram illustrating an insert-molded body 1 according to a second embodiment of the present disclosure. In the insert-molded body 1 illustrated in FIG. 7, the metal component 20 has a first portion 21 extending in the vertical direction on the paper surface, and a second portion 22 extending in the left-right direction on the paper surface, and the first portion 21 and the second portion 22 are connected by a diverting portion 23 extending in a direction different by 45 degrees with respect to both of the first portion 21 and the second portion 22. In the first embodiment, the first portion 21 and the second portion 22 directly intersect at a right angle and are connected to each other, but in the second embodiment, the first portion 21 and the second portion 22 do not directly intersect and are indirectly connected via the diverting portion 23. In the present embodiment, the whole of the portion extending in a direction different by 45 degrees with respect to both of the first portion 21 and the second portion 22 can be regarded as the diverting portion 23.

FIG. 8 is a diagram illustrating an insert-molded body 1 according to a third embodiment of the present disclosure. In the insert-molded body 1 illustrated in FIG. 8, the metal component 20 has a first portion 21 extending in the vertical direction on the paper surface and a second portion 22 extending in the left-right direction on the paper surface, and the first portion 21 and the second portion 22 are connected by a quarter-circular arc-shaped portion 231. In this case, the whole of the quarter-circular arc-shaped portion 231 can be regarded as the diverting portion. That is, the whole of the portion in which the direction is changed can be regarded as the diverting portion 23 not only in the case of a shape extending linearly as in the diverting portions of the first and second embodiments but also a shape in which the direction is continuously changed as in the present embodiment. In the present embodiment, the first portion 21 and another first portion 21 extending in parallel with the first portion 21 are connected by a semicircular arc-shaped portion 232. In this case, the whole of the semicircular arc-shaped portion 232 can also be regarded as the diverting portion 23.

In the insert-molded body 1 according to the above embodiment, the resin component 10 and the metal component 20 are fixed by the caulking portion 30 formed of the resin material, but the present invention is not limited to this embodiment. For example, the resin component 10 and the metal component 20 may be fixed in the diverting portion 23 after the insert-molded body 1 is taken out from the mold 40. The fixing may be mechanical fixing with a bolt, a rivet, or the like, or may be achieved by using an adhesive or the like. However, from the viewpoint of manufacturing efficiency, it is preferable to perform fixing in the molding step.

In the insert-molded body 1 according to the above embodiment, the first in-plane direction and the second in-

plane direction are perpendicular to each other, but the first in-plane direction and the second in-plane direction may not be perpendicular as long as the first in-plane direction and the second in-plane direction extend in different directions. An angle between the first in-plane direction and the second in-plane direction is preferably 10 degrees or more and 170 degrees or less, more preferably 20 degrees or more and 160 degrees or less, and still more preferably 45 degrees or more and 135 degrees or less. The angle between the first in-plane direction and the second in-plane direction here is the angle between the vector heading toward the first portion 21 from the diverting portion 23 and the vector heading toward the second portion 22 from the diverting portion 23 at the first portion 21 and the second portion 22 connected to each other by the diverting portion 23. An angle between the first in-plane direction and the second in-plane direction is defined within a range of 0 degrees or more and 180 degrees or less.

In the description of the insert-molded body 1 according to the above embodiment, the positions of the first portion 21 and the second portion 22 are specified with reference to the drawings, but the first portion 21 and the second portion 22 can be set to any portions where the metal component 20 extends. That is, the first portion 21 and the second portion 22 illustrated in the drawings are merely examples, and another portion may be set as the first portion 21 or the second portion 22. Consequently, it is also possible to set the first in-plane direction and the second in-plane direction to an arbitrary direction in which the metal component 20 extends. If an angle of at least one combination of the first in-plane direction and the second in-plane direction that can be set is within the above range, it can be said that "the angle between the first in-plane direction and the second in-plane direction is within the range."

In addition, in the method of manufacturing the insert-molded body 1 according to the above embodiment, an embodiment in which the resin material is compression-molded has been described, but the insert-molded body may be formed by another molding method such as injection molding. The effect of the present disclosure can be obtained by any molding method in which heating is performed to a temperature higher than room temperature during molding.

Industrial applicability

The insert-molded body and the method of manufacturing an insert-molded body of the present disclosure are applicable to various components such as a moving body and an industrial machine, and can be applied to, for example, a vehicle impact detection sensor, a coil, a planar heating element, and the like.

REFERENCE SIGNS LIST

1, 1201: Insert-molded body
10: Resin component
11, 1203: Uneven thickness portion
12, 1204: Thin portion
13: First resin layer
14: Second resin layer
20, 1202: Metal component
21: First portion
22: Second portion
23: Diverting portion
30: Caulking portion
40: Mold
41: Upper mold
42: Lower mold
50: Metal material
60: Sealing material
110: Resin component
110A: Region A
110B: Region B
110C: Region C
111: Uneven thickness portion
112: Thin portion
901: Two parallel ideal straight lines
902: Installation surface of uneven thickness portion 11 on which metal component 20 is disposed
1101: Vehicle
1102: Protective cover of battery tray

1103: Electric circuit for impact detection

## Claims

1. An insert-molded body comprising:

   a resin component; and
   a metal component, wherein
   the resin component has an uneven thickness portion and a thin portion thinner than the uneven thickness portion,
   the metal component is at least partially disposed on an outer surface of the resin component along the uneven thickness portion or the thin portion,
   the metal component has a diverting portion in which a direction extending on the outer surface is changed, and
   the resin component and the metal component are fixed to each other in the diverting portion.

2. The insert-molded body according to claim 1, wherein
   the metal component is at least partially disposed along the thin portion.

3. The insert-molded body according to claim 1, wherein
   the metal component is at least partially disposed along the uneven thickness portion.

4. The insert-molded body according to any one of claims 1 to 3, wherein

   the metal component has a first portion extending in a first in-plane direction and a second portion extending in a second in-plane direction different from the first in-plane direction, and
   the diverting portion connects the first portion and the second portion.

5. The insert-molded body according to claim 4, wherein
   the first in-plane direction and the second in-plane direction are perpendicular to each other.

6. The insert-molded body according to any one of claims 1 to 5, wherein

   the resin component is formed from a fiber-reinforced composite material, and
   a fiber volume fraction Vfa of the uneven thickness portion is smaller than a fiber volume fraction Vfb of the thin portion.

7. The insert-molded body according to any one of claims 1 to 6, wherein

   the resin component is formed from a fiber-reinforced composite material, and
   the resin component has a first resin layer and a second resin layer disposed closer to the metal component than the first resin layer, and
   a fiber volume fraction Vf1 of the first resin layer is larger than a fiber volume fraction Vf2 of the second resin layer.

8. The insert-molded body according to any one of claims 1 to 7, wherein

   the resin component is formed from a fiber-reinforced composite material, and
   a weight average fiber length of reinforcing fibers contained in the resin component is 100 mm or less.

9. The insert-molded body according to claim 2 or 3, wherein
   where a direction perpendicular to the outer surface of the resin component is a thickness direction, a difference between a thickness of the uneven thickness portion and a thickness of the thin portion is equal to or greater than a thickness of the metal component.

10. The insert-molded body according to any one of claims 1 to 9, wherein
    the uneven thickness portion and the thin portion are alternately positioned in a cross-sectional view perpendicular to the outer surface of the resin component.

**11.** The insert-molded body according to claim 10, wherein

the metal component is at least partially disposed along the uneven thickness portion or the thin portion, and
a relationship between a flatness Fa of the resin component and a difference h between a thickness of the uneven thickness portion and a thickness of the thin portion satisfies $0 < Fa/h < 1.3$.

**12.** A battery tray or a protective cover for a battery tray, comprising the insert-molded body according to any one of claims 1 to 11, wherein
the metal component is an electric circuit for impact detection.

**13.** An inverter box comprising the insert-molded body according to any one of claims 1 to 11, wherein
the metal component is an electric circuit.

**14.** A method of manufacturing an insert-molded body having a resin component and a metal component, wherein

the resin component has an uneven thickness portion and a thin portion thinner than the uneven thickness portion,
the metal component is at least partially disposed on an outer surface of the resin component along the uneven thickness portion or the thin portion, and
the metal component has a diverting portion in which a direction extending on the outer surface is changed,
the method includes a step of fixing the resin component and the metal component to each other in the diverting portion.

**15.** The method of manufacturing an insert-molded body according to claim 14, wherein

the insert-molded body further includes a sealing layer for sealing the metal component, and
the method comprises a step of molding the sealing layer together with the resin component and the metal component.

FIG.1

1
20
10
B
B
A
A
21
22
30
23

FIG.2

1
20
11
12

FIG.3

30
20
1
12
11

FIG.4

111
110
110A
112
110C
F
110B

FIG.5

1
20
14
13

FIG.6

41
40
42
50
60

FIG.7

1
10
22
23
21
30


FIG.8

1
231
30
10
22
21
30
232

FIG.9A

10
Ly
12
Z
X
Y
11
901

FIG.9B

10
902
902
902

FIG.10

10
12
h
11

FIG.11

1101
1102
1103

FIG.12

1201
1202
1203
1204

**INTERNATIONAL SEARCH REPORT**

International application No. **PCT/JP2023/038928**

**A. CLASSIFICATION OF SUBJECT MATTER**

***B29C 45/14***(2006.01)i; ***B29C 43/18***(2006.01)i; ***B29C 65/70***(2006.01)i
FI: B29C45/14; B29C43/18; B29C65/70

According to International Patent Classification (IPC) or to both national classification and IPC

**B. FIELDS SEARCHED**

Minimum documentation searched (classification system followed by classification symbols)

B29C45/14; B29C43/18; B29C65/70

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-065322 A (TOYOTA JIDOSHA KABUSHIKI KAISHA) 26 April 2018 (2018-04-26) | 1-15 |
| A | JP 2015-199321 A (HITACHI CHEMICAL COMPANY, LTD.) 12 November 2015 (2015-11-12) | 1-15 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 January 2024** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/038928**

| Patent document cited in search report | Publication date (day/month/year) | Patent family member(s) | Publication date (day/month/year) |
|---|---|---|---|
| JP 2018-065322 A | 26 April 2018 | (Family: none) | |
| JP 2015-199321 A | 12 November 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015029482 A
- WO 2013021482 A